# EUROPEAN PATENT SPECIFICATION

(11) **EP 1 291 241 B1**
(45) Date of publication and mention of the grant of the patent: **13.08.2008**
(21) Application number: 02020043.2
(22) Date of filing: 06.09.2002
(51) Int. Cl.: B60Q 1/14

(54) **Complex switch lever for automobile**
Komplexer Hebelschalter für Fahrzeuge
Interrupteur complexe à levier pour véhicule

(30) Priority: 07.09.2001 JP 2001271404
(43) Date of publication of application: 12.03.2003
(73) Proprietor: KABUSHIKI KAISHA TOKAI RIKA DENKI SEISAKUSHO, Niwa-gun, Aichi 480-0195 (JP)
(72) Inventor: Hayakawa, Junichi, Ohguchi-cho, Niwa-gun, Aichi 480-0195 (JP)
(74) Representative: Michalski, Stefan

(56) References cited:
- EP-A- 1 036 710
- US-A- 5 003 132
- US-A- 5 107 243
- US-A- 5 670 765
- US-A- 5 900 601

## Description

The present invention relates to a complex switch lever for an automobile. More specifically, the present invention pertains to a complex switch lever having an on/off switch for headlights and taillights and to an on/off switch for fog lights.

A typical complex switch lever located on a steering column of an automobile includes a first knob and a second knob. The first knob is manipulated to control a rotary switch for turning on and off headlights and taillights. The second knob is manipulated to control a rotary switch for turning on and off fog lights. The first and second knobs are rotatably arranged on a common support shaft.

The first knob and the second knob of the complex switch lever are independently manipulated.

However, even when a driver manipulates the first knob to turn off the headlights and the taillights, the fog lights remain on unless the second knob is manipulated. Therefore, the driver might misunderstand that the fog lights are turned off by manipulating the first knob and forget to turn off the fog lights.

To prevent a driver from forgetting to turn off the fog lights, a cancellation mechanism has been provided between the first knob and the second knob. The cancellation mechanism includes a cooperation member, which couples the first knob with the second knob. The cooperation member moves in conjunction with the rotation of the first knob.

Therefore, when the first knob is manipulated from an on position to an off position to turn off the headlights and the taillights, the second knob located at the on position moves in conjunction with the cooperation member of the cancellation mechanism. The cooperation member forces the second knob to the off position. This prevents the driver from forgetting to turn off the fog lights.

However, in the complex switch lever that has the cancellation mechanism, the cooperation member is located between the first knob and the second knob. Therefore, a space is required for the cooperation member to operate.

In a case when the cooperation member is located within the complex switch lever, the cooperation member takes up the space and a switching device cannot be incorporated in the complex switch lever. The switching device includes a movable contact point and a fixed contact point. The movable contact point moves in conjunction with the manipulation of the first knob and selectively contacts and moves away from the fixed contact point.

Therefore, a switch box is generally arranged on the proximal end, or the steering column side, of the support shaft, on which the first knob and the second knob are arranged. The switching device, which has the movable contact point and the fixed contact point, is located in the switch box. In this case, the switching device is manipulated by a remote control via the support shaft.

However, instead of the above described switching device, which is manipulated by a remote control, there is a demand for a complex switch lever that incorporates the switching device. This is because if the switching device is incorporated in the complex switch lever, a relay contact can be used for turning on and off the current supply to the headlights and the taillights.

US 5,003,132 discloses a switch lever with a first knob and a second knob wherein a push button is located at the distal end of the first knob. A central rod of the push button can actuate a switch element which is arranged inside the first knob. The switch element is loosely guided by a support shaft in order to return the push button towards its rest position by means of a spring.

Accordingly, it is an objective of the present invention to provide a complex switch lever that has a cancellation mechanism and allows a switching device for a first knob to be embedded within the complex switch lever.

To achieve the above objective, the present invention provides a complex switch lever for an automobile including a cancellation mechanism. The complex switch includes a first switch knob, which is selectively switched between an on position and an off position, and a second switch knob, which is selectively switched between an on position and an off position. The first switch knob and the second switch knob are rotatably supported by a support shaft. When the first switch knob is turned from the on position to the off position while the second switch knob is located at the on position, the second switch knob is forced to move from the on position to the off position by the cancellation mechanism. The complex switch lever is characterized in that the first switch knob includes an accommodating chamber. The accommodating chamber accommodates a switch substrate, which is secured to the support shaft and has a fixed contact point. The first switch knob includes a movable contact point, which contacts and moves away from the fixed contact of the switch substrate.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is an exploded perspective view illustrating a vehicular complex switch lever according to a first embodiment of the present invention;
Fig. 2 is a cross-sectional view illustrating the switch lever taken along line 2-2 in Fig. 1;
Fig. 3(a) is a bottom view illustrating a light switch knob used in the switch lever shown in Fig. 1;
Fig. 3(b) is a cross-sectional view taken along line 3(b)-3(b) in Fig. 3(a);
Fig. 4 is a plan view illustrating a fixed knob used in the switch lever shown in Fig. 1;
Fig. 5(a) is a cross-sectional view taken along line 5(a)-5(a) in Fig. 4;
Fig. 5(b) is a cross-sectional view taken along line 5(b)-5(b) in Fig. 4;
Fig. 6 is a cross-sectional view for explaining an operation of a lock piece used in the switch lever shown in Fig. 1;
Fig. 7(a) is a plan view illustrating a fog light switch knob located at an R1 position (fog lights off position);
Fig. 7(b) is a plan view illustrating the fog light switch knob located at an R2 position (Fr fog lights on position);
Fig. 8 is a cross-sectional view explaining an operation of the lock piece used in the switch lever shown in Fig. 1;
Fig. 9 is a cross-sectional view illustrating a state where the switch lever shown in Fig. 1 is engaged with the fog light switch knob;
Fig. 10(a) is a plan view illustrating a state where the fog light switch knob is located at the R1 position (fog lights off position);
Fig. 10(b) is a plan view illustrating a state where the fog light switch knob is located at the R2 position (Fr fog lights on position);
Fig. 10(c) is a plan view illustrating a state where the fog light switch knob is located at the R3 position (Fr/Re fog lights on position); and
Fig. 11 is a time chart showing the on/off state of each light.

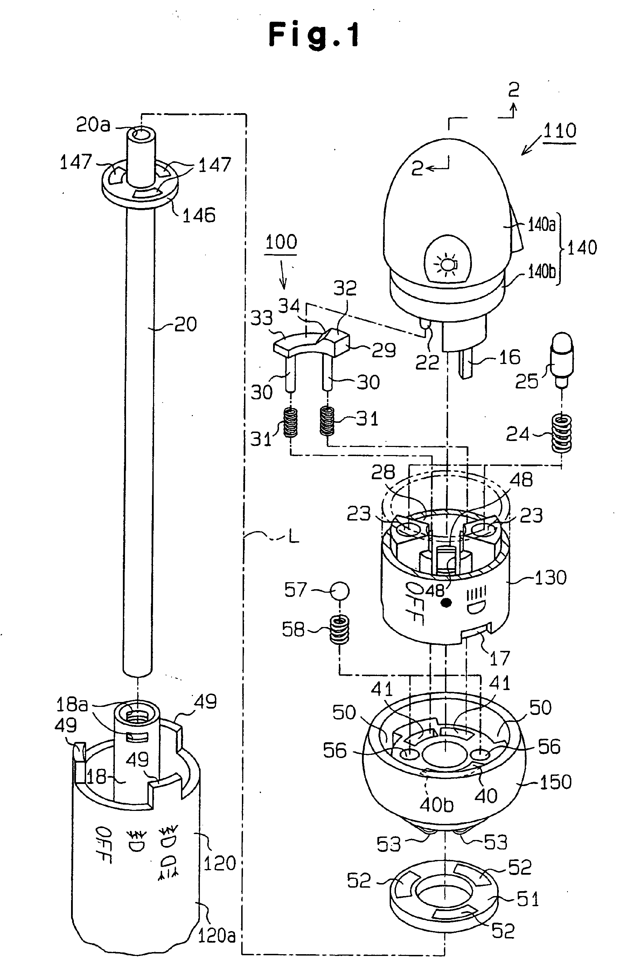

A complex switch lever 110 according to a first embodiment of the present invention will now be described with reference to Figs. 1 to 11. The switch lever 110 is used in an automobile and extends radially from a steering column (not shown) of the automobile.

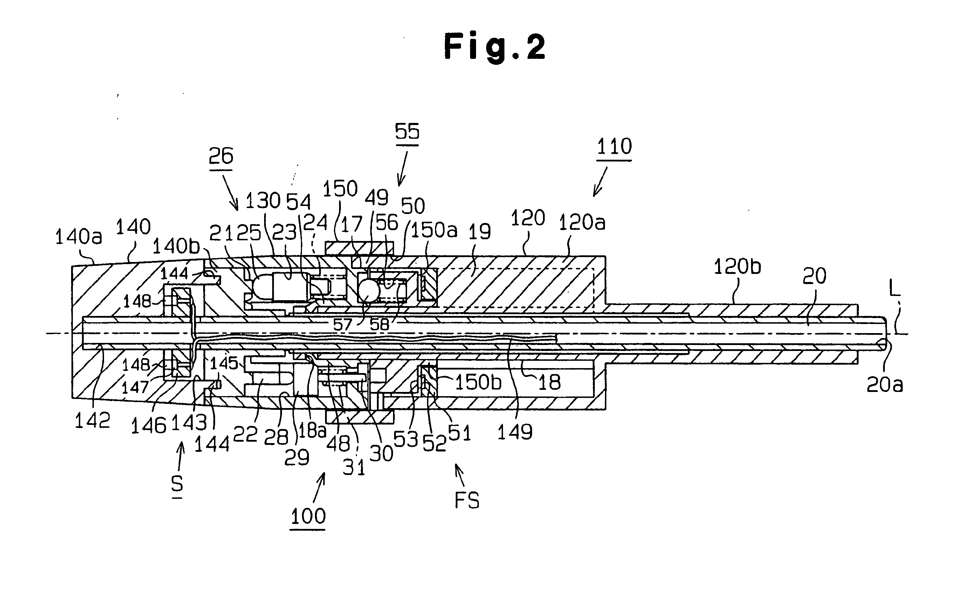

Fig. 2 is a cross-sectional view taken along line 2-2 in Fig. 1. The phases of portions illustrated above and below an axis L of the switch lever 110 differ from each other by 90 degrees.

As shown in Figs. 1 and 2, the switch lever 110 includes an outer cylindrical shaft 120, a fixed knob 130, which is fixed to the outer cylindrical shaft 120, a light switch knob 140, and a fog light switch knob 150. The light switch knob 140 and the fog light switch knob 150 are rotary switch knobs and serve as a first switch knob and a second switch knob, respectively.

The outer cylindrical shaft 120 includes a large diameter portion 120a and a small diameter portion 120b. An inner cylinder 18 axially extends from the inner bottom center of the outer cylindrical shaft 120. Engaging pieces 49 are formed at the distal end of the large diameter portion 120a of the outer cylindrical shaft 120. The distal end of the inner cylinder 18 extends longer than the distal end of the large diameter portion 120a. A pair of engaging holes 18a is formed through the circumferential wall of the inner cylinder 18 such that the engaging holes 18a are apart from each other by 180 degrees. As shown in Fig. 2, the inner circumferential surface of the large diameter portion 120a and the inner cylinder 18 are connected by connecting ribs 19.

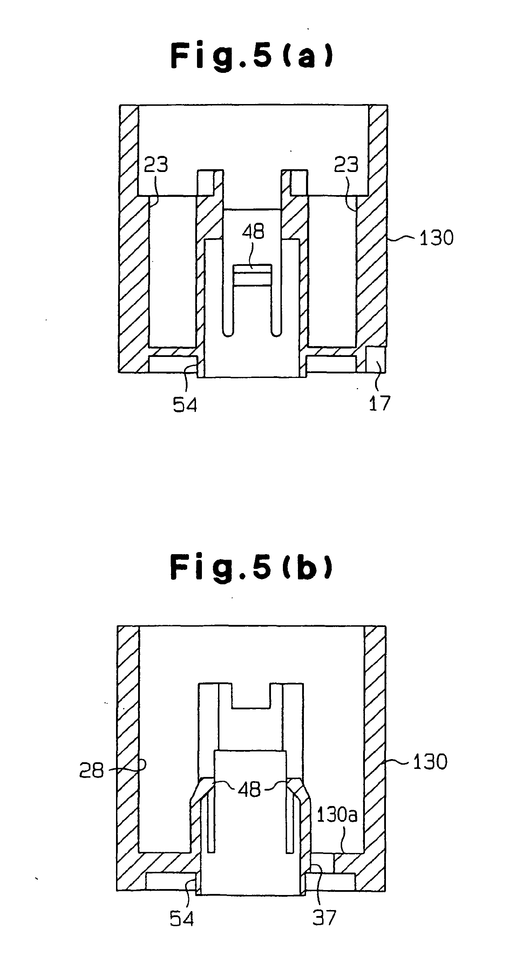

The fixed knob 130 is attached to the distal end of the inner cylinder 18. The fixed knob 130 is substantially cup-shaped. As shown in Fig. 5(a), a boss 54 is formed at the center of the bottom portion of the fixed knob 130 and extends in the axial direction. A pair of engaging pieces 48 is formed at the upper portion of the boss 54 such that the engaging pieces 48 are apart from each other by 180 degrees. The fixed knob 130 is fitted to the inner cylinder 18 via the boss 54. Each engaging piece 48 is engaged with one of the engaging holes 18a of the inner cylinder 18 so that the fixed knob 130 is secured to the inner cylinder 18. As shown in Fig. 2, engaging grooves 17 are formed on the outer surface of the lower circumferential wall of the fixed knob 130 at predetermined angular intervals. The engaging pieces 49 are engaged with the engaging grooves 17 to prevent the fixed knob 130 from being rotated about the axis L.

As shown in Fig. 2, a tubular support shaft 20 is inserted in the inner cylinder 18. The proximal end of the support shaft 20 is attached to a base (not shown), which is located on the steering column. The light switch knob 140 is attached to the distal end of the support shaft 20 such that the light switch knob 140 does not fall off the support shaft 20. The light switch knob 140 is rotatable about the axis L of the support shaft 20.

As shown in Figs. 1 and 2, the light switch knob 140 includes a main body 140a and a connecting member 140b. The main body 140a is cup-shaped and has a fitting bore 142. The support shaft 20 is fitted to the fitting bore 142 such that the support shaft 20 does not fall off the fitting bore 142. An accommodating recess 143 is formed in the main body 140a. The cross-section of the accommodating recess 143 is circular.

The connecting member 140b is substantially disk-shaped. The support shaft 20 is inserted through the center of the connecting member 140b. The connecting member 140b rotates with respect to the support shaft 20. Projections 144 are formed on the lower surface of the main body 140a. Engaging holes 145 are formed in the connecting member 140b. The projections 144 are press fitted to the engaging holes 145 so that the main body 140a is integrally coupled with the connecting member 140b.

As a result, the main body 140a and the connecting member 140b integrally rotate with respect to the support shaft 20 and close the accommodating recess 143. The outer circumference of the connecting member 140b is fitted to the inner circumferential surface of the distal end of the fixed knob 130. The connecting member 140b slides and rotates with respect to the fixed knob 130.

The accommodating recess 143, which is closed by the connecting member 140b, forms an accommodating chamber. A fixed switch substrate 146, which is used for lights, is arranged on the support shaft 20 inside the accommodating recess 143. The support shaft 20 is inserted through the fixed switch substrate 146.

As shown in Figs. 1 and 2, the fixed switch substrate 146 is formed of a disk-shaped print-circuit board. A through hole is formed at the center of the fixed switch substrate 146. The support shaft 20 is inserted through the through hole. Fixed terminals 147 are formed on the surface of the fixed switch substrate 146 that faces the inner ceiling of the main body 140a. The fixed terminals 147 are formed along a circle the center of which is at the axis L. A part of each fixed terminal 147 is exposed from the fixed switch substrate 146 and functions as a connecting portion.

As shown in Fig. 2, movable contacts 148 are arranged on the inner ceiling of the main body 140a. The movable contacts 148 slide with respect to the fixed switch substrate 146 when the main body 140a of the light switch knob 140 is turned from an OFF position Q1 to a first ON position Q2 or a second ON position Q3, or turned in the reverse direction. The movable contacts 148 selectively cause a short circuit or open the circuit between the pair of fixed terminals 147 of the fixed switch substrate 146.

As shown in Fig. 2, a switch harness 149 is inserted in a through hole 20a of the support shaft 20. The upper end of the switch harness 149 is conducted to the outside through openings formed on the side portion of the support shaft 20 and is connected to the terminals 147 of the fixed switch substrate 146. The switch harness 149 is conducted to the outside from the proximal end of the support shaft 20 and is connected to a headlight relay and a taillight relay, which are not shown.

When the main body 140a of the light switch knob 140 is located at the OFF position Q1, the headlight relay and the taillight relay are turned off. When the main body 140a of the light switch knob 140 is located at the first ON position Q2, the headlight relay is turned off and the taillight relay is turned on. When the main body 140a is located at the second ON position Q3, the headlight relay and the taillight relay are turned on. When each relay is turned on, the corresponding one of the headlights and the taillights are lighted.

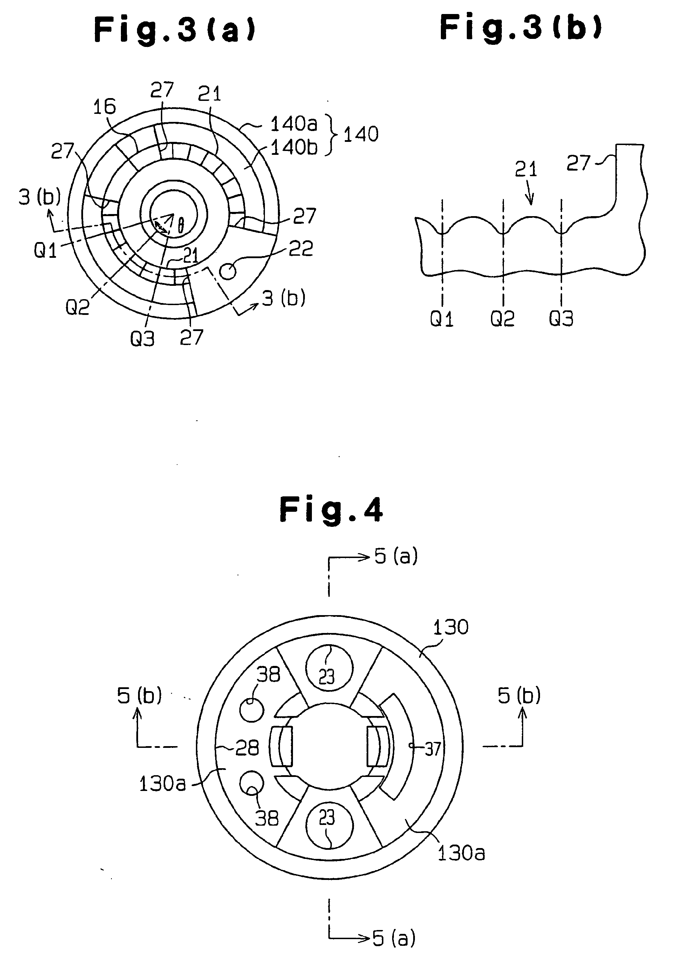

Two sets of positioning bulges 21 are located on the bottom surface of the connecting member 140b apart from each other by 180 degrees as shown in Fig. 3(a). Each set of positioning bulges 21 has corrugated cross-section and arranged to describe an arch. As shown in Fig. 3(a), a pin 22 is located between the sets of positioning bulges 21. The pin 22 extends toward the fixed knob 130 along the axis L.

A cooperation lever 16 extends from the bottom surface of the connecting member 140b at a position 180 degrees apart from the pin 22 along the axis L. An arcuate elongated hole 37 is formed on a bottom portion 130a of the fixed knob 130 as shown in Fig. 4. The cooperation lever 16 extends toward the fog light switch knob 150 through the elongated hole 37. The elongated hole 37 is formed along a predetermined angular range to avoid interfering with the cooperation lever 16 when the light switch knob 140 is rotated.

A pair of accommodating holes 23 is formed in the fixed knob 130 apart from each other by 180 degrees. The openings of the accommodating holes 23 face the connecting member 140b of the light switch knob 140. A coil spring 24 and a click piece 25 are accommodated in each accommodating hole 23. Each click piece 25 has a hemispherical distal end and a columnar proximal end. Each click piece 25 is pressed against one of the sets of positioning bulges 21 of the light switch knob 140 by the corresponding coil spring 24.

Fig. 2 shows one pair of the coil spring 24 and the click piece 25 and the other pair is omitted.

The positioning bulges 21, the coil springs 24, and the click pieces 25 constitute a click mechanism 26 for the light switch knob 140.

When the light switch knob 140 is rotated, each click piece 25 of the click mechanism 26 slides over one of the positioning bulges 21 against the force of the corresponding coil spring 24. The click piece 25 moves to and engages with an adjacent hollow formed between the positioning bulges 21. Once the click piece 25 is engaged with the hollow, the click piece 25 is held at the hollow by the force of the coil spring 24 unless the light switch knob 140 is manipulated.

In the present invention, the light switch knob 140 is rotated by a predetermined angular range θ as shown in Fig. 3(a) and is controlled to click within the range. That is, walls 27 are formed on both ends of each set of the positioning bulges 21 as shown in Fig. 3(b) and each click piece 25 abuts against one of the walls 27. When each click piece 25 abuts against one of the walls 27, the click piece 25 is held at the hollow closest to the wall 27.

When each click piece 25 engages with one of the hollows formed by the corresponding set of the positioning bulges 21, the light switch knob 140 is located at one of the OFF position Q1, at which the headlights and the taillights are turned off, the first ON position Q2, at which the headlights are turned off and the taillights are turned on, and the second ON position Q3, at which the headlights and the taillights are turned on.

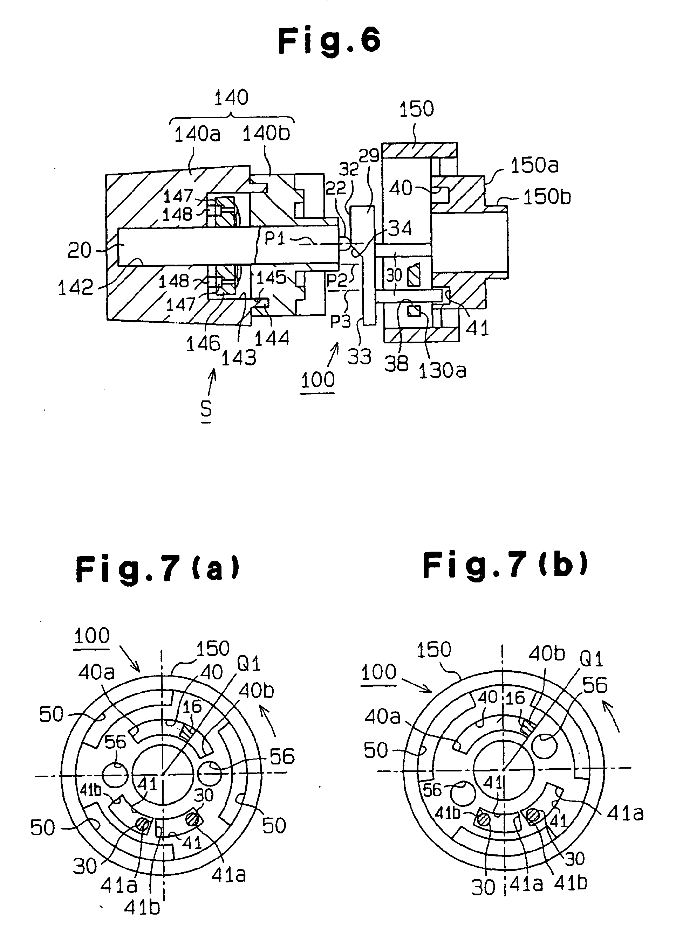

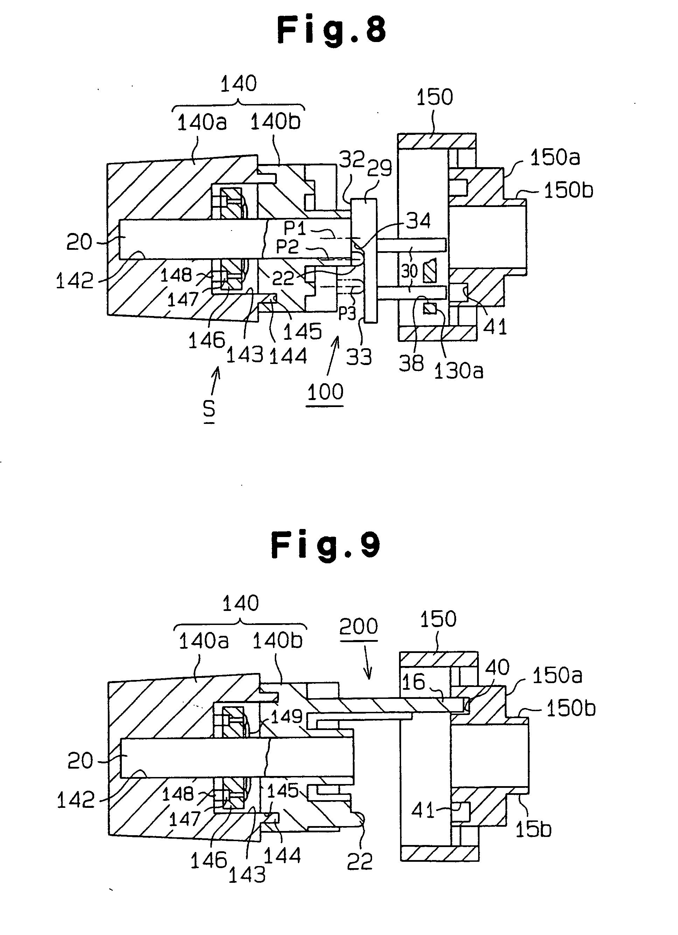

When the light switch knob 140 is located at one of the OFF position Q1, the first ON position Q2, and the second ON position Q3, the pin 22 is located at positions P1, P2, and P3 shown in Figs. 6 and 8, respectively.

To facilitate illustration, the fixed knob 130 is omitted in Figs. 6, 8, and 9. The fog light switch knob 150 is fitted to the inner cylinder 18 between the fixed knob 130 and the outer cylindrical shaft 120. The fog light switch knob 150 rotates about the axis L. The fog light switch knob 150 is substantially cup-shaped. As shown in Fig. 1, a small diameter portion 150b is formed at the proximal end 150a of the fog light switch knob 150 and extends in the axial direction. The small diameter portion 150b abuts against and slides with respect to the distal end of the connecting ribs 19.

As shown in Figs. 1 and 2, arcuate through holes 50 are formed at the bottom of the fog light switch knob 150. Each engaging piece 49 of the outer cylindrical shaft 120 is inserted in one of the through holes 50. The engagement of the through holes 50 with the engaging pieces 49 restricts the rotational amount of the fog light switch knob 150.

A pair of accommodating bores 56 is formed at the bottom portion of the fog light switch knob 150 apart from each other by 180 degrees. A locking ball 57 and a coil spring 58 are accommodated in each accommodating bore 56. The locking ball 57 is urged by the coil spring 58 to constantly abut against positioning bulges formed on the bottom surface of the fixed knob 130. The positioning bulges of the fixed knob 130 have substantially the same structure as the positioning protrusions formed on the light switch knob 140.

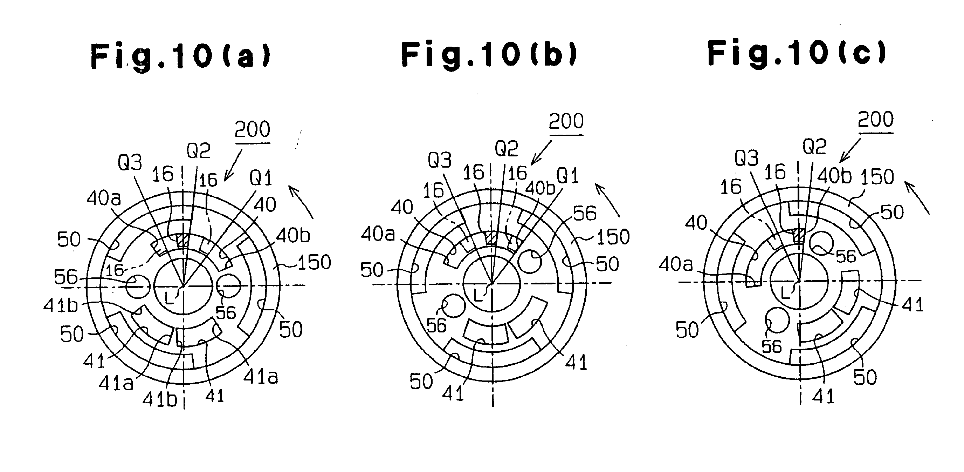

When the fog light switch knob 150 is rotated, the locking ball 57 rolls over the positioning bulges and hollows, which are formed between the bulges, alternately. When the fog light switch knob 150 is stopped, the locking ball 57 engages with the corresponding hollow. Thus, the fog light switch knob 150 is held at one of an R1 position, which is shown in Figs. 7(a) and 10(a), an R2 position, which is shown in Figs. 7(b) and 10(b), and an R3 position, which is shown in Fig. 10(c).

When the fog light switch knob 150 is located at the R1 position, or the fog lights off position, the front fog lights and the rear fog lights are both turned off. When the fog light switch knob 150 is located at the R2 position, or the Fr fog lights on position, the front fog lights are lighted on. When the fog light switch knob 150 is located at the R3 position, or the Fr/Re fog lights on position, the front fog lights and the rear fog lights are both lighted on.

The positioning bulges of the fixed knob 130, the locking balls 57, and the coil springs 58 constitute a click mechanism 55 of the fog light switch knob.

A cancellation groove 40 is formed on the bottom portion of the fog light switch knob 150 at a portion corresponding to the cooperation lever 16. The cancellation groove 40 describes an arc about the axis L. The cooperation lever 16 is inserted in and slides with respect to the cancellation groove 40.

As shown in Figs. 7(a) and 7(b), the anti-clockwise end portion of the cancellation groove 40 is referred to as a first end 40a. When the fog light switch knob 150 is located at the R1 position, the first end 40a contacts the cooperation lever 16 of the light switch knob 140 being located at the second ON position Q3 as shown in Fig. 10(a).

Arrows in Figs. 10(a), 10(b), and 10(c) represent the direction to which the fog light switch knob 150 is manipulated when turning on the fog light.

As shown in Fig. 10(b), when the fog light switch knob 150 is located at the R2 position (Fr fog lights on position), the clockwise end of the cancellation groove 40 (hereinafter, referred to as a second end 40b) abuts against the cooperation lever 16 of the light switch knob 140 being located at the OFF position Q1 as shown in Fig. 10(b).

Further, as shown in Fig. 10(c), when the fog light switch knob 150 is located at the R3 position (Fr/Re fog lights on position), the second end 40b of the cancellation groove 40 abuts against the cooperation lever 16 of the light switch knob 140 being located at the first ON position Q2 as shown in Fig. 10(c).

The cooperation lever 16 and the cancellation groove 40 constitute a cancellation mechanism 200.

As shown in Figs. 1 and 2, a fixed switch substrate 51 for the fog light is secured to the distal end of the connecting ribs 19 and is loosely fitted to the inner cylinder 18. The fixed switch substrate 51 is formed of, for example, a disk-shaped print-circuit board having a bore at the center. The fixed switch substrate 51 includes terminals 52. As shown in Figs. 1 and 2, a movable contact 53 is located at the end surface of the fog light switch knob 150.

The movable contact 53 slides with respect to the fixed switch substrate 51 when the fog light switch knob 150 is turned from the R1 position to the R2 position or the R3 position, or turned in the reverse direction. The fixed switch substrate 51, the terminals 52, and the contact 53 constitute a fog light switch FS, which selectively causes a short circuit or opens the circuit between the terminals 52 of the fixed switch substrate 51.

A switch harness (not shown), which is inserted in the support shaft 20, is connected to the terminals 52 of the fixed switch substrate 51. The switch harness is conducted to the outside of the support shaft 20 and is connected to the front fog light relay and the rear fog light relay.

When the fog light switch knob 150 is located at the R1 position (fog lights off position), the front fog light relay and the rear fog light relay are both turned off. When the fog light switch knob 150 is located at the R2 position (Fr fog lights on position), the front fog light relay is turned on and the rear fog light relay is turned off. When the fog light switch knob 150 is located at the R3 position (Fr/Re fog lights on position), the front fog light relay and the rear fog light relay are both turned on. That is, turning on each relay lights on the front fog lights and the rear fog lights.

The fog lights (not shown), which are turned on and off by the fog light switch FS, are the front fog lights located at the front of the vehicle body and the rear fog lights located at the rear of the vehicle body. The fog light switch FS functions as a switch for switching the front fog lights and the rear fog lights by turning on and off the front fog light relay and the rear fog light relay.

As shown in Figs. 1 and 2, the opening of an accommodating hole 28, which is located in the fixed knob 130, faces the light switch knob 140. A lock piece 29 is fitted in the accommodating hole 28 and slides in the axial direction. The lock piece 29 has an arcuate shape as viewed from the top and serves as an operation member. A pair of columns 30 extends from the lower surface of the lock piece 29. A coil spring 31 is wound about each column 30. In the preferred embodiment, the columns 30 serve as locking projections. One end of each coil spring 31 abuts against the bottom portion of the accommodating hole 28. Each coil spring 31 urges the lock piece 29 toward the light switch knob 140.

The surface of the lock piece 29 on the light switch knob side, that is, the top surface of the lock piece 29, includes a lock surface 32, an unlock surface 33, and an inclined surface 34.

The lock surface 32 is located close to the light switch knob 140 and is formed on a plane perpendicular to the axis L. The unlock surface 33 is located closer to the fixed knob 130 than the lock surface 32 and formed on a plane perpendicular to the axis L. The inclined surface 34 connects the unlock surface 33 to the lock surface 32.

The lock surface 32 is arranged corresponding to the P1 position of the pin 22. The unlock surface 33 is arranged corresponding to the P2 and P3 positions of the pin 22. The lock piece 29 constantly abuts against the pin 22 by the force of the coil springs 31.

A pair of through holes 38 is formed on the bottom portion 130a of the accommodating hole 28 of the fixed knob 130. The through holes 38 are arranged at portions corresponding to the columns 30 as shown in Fig. 4. Each column 30 is loosely inserted in one of the through holes 38.

When the pin 22 is located at the P2 position or the P3 position as shown in Fig. 8, the pin 22 abuts against the unlock surface 33 of the lock piece 29. Thus, the columns 30 slightly protrude outside from the bottom portion 130a of the fixed knob 130. This position is referred to as an unlock position.

When the pin 22 is located at the P1 position as shown in Fig. 6, the pin 22 abuts against the lock surface 32 of the lock piece 29. This increases the amount of protrusion of the columns 30 from the bottom portion 130a of the fixed knob 130. The position of the columns 30 in this state is referred to as a lock position.

As shown in Figs. 7(a) and 7(b), a pair of lock grooves 41 is formed at the bottom portion of the fog light switch knob 150 apart from the cancellation groove 40 by substantially 180 degrees. The lock grooves 41 are located at positions corresponding to the columns 30 and are located next to each other along the circumferential direction. When in the lock position, each column 30 is inserted in one of the lock groove 41. When the fog light switch knob 150 is located at the R1 position (fog lights off position), a first end 41a of each lock groove 41 abuts against the corresponding column 30 that is at the lock position as shown in Fig. 7(a). Arrows in Figs. 7(a) and 7(b) represent the direction in which the fog light switch knob 150 is manipulated to turn on the fog light.

When the fog light switch knob 150 is located at the R2 position (Fr fog lights on position), a second end 41b of each lock groove 41 abuts against the corresponding column 30 that is at the lock position as shown in Fig. 7(b).

That is, the movement of the columns 30 at the lock position is restricted by the engagement of the lock grooves 41 with the first and the second ends 41a, 41b. Therefore, the fog light switch knob 150 is only shifted between the R1 position (fog lights off position) and the R2 position (Fr fog lights on position).

The pin 22, the lock piece 29, the columns 30, the coil springs 31, and the lock grooves 41 constitute a lock mechanism 100. The coil springs 31 serves as urging means.

The operation of the switch lever 110 will now be described.

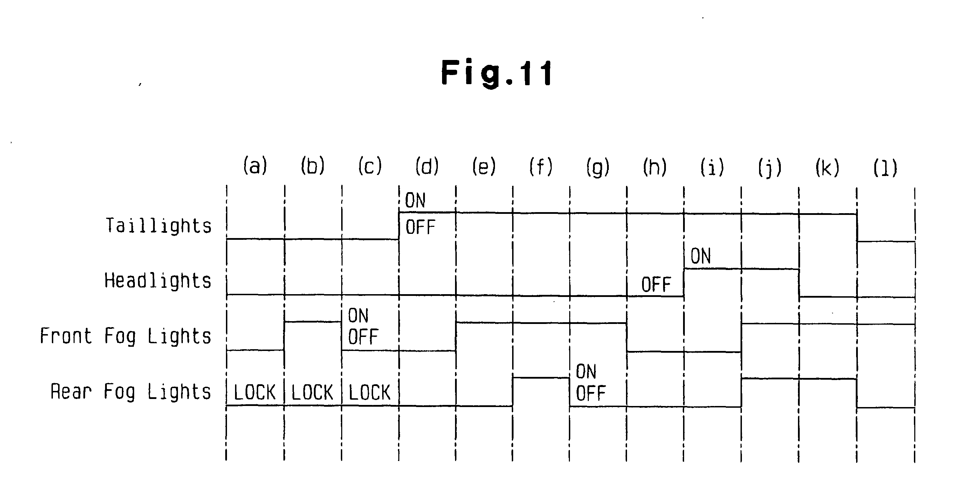

For convenience of description, suppose that the light switch knob 140 is located at the OFF position Q1 and the fog light switch knob 150 is located at the R1 position. In this case, the headlights, the taillights, the front fog lights, and the rear fog lights are turned off (see Fig. 11(a), and Tables 1 and 2).

**Table 1**

| Position of Light Switch Knob | Name of Position | Position of Pin 22 | Head Light | Tail Light |
|---|---|---|---|---|
| Q1 | Off Position | P1 | OFF | OFF |
| Q2 | First On Position | P2 | OFF | ON |
| Q3 | Second On Position | P3 | ON | ON |

**Table 2**

| Position of Fog Switch Knob | Front Fog Lights | Rear Fog Lights |
|---|---|---|
| R1 | OFF | OFF |
| R2 | ON | OFF |
| R3 | ON | ON |

In this state, the pin 22 of the light switch knob 140 is located at the P1 position shown in Fig. 6 and is engaged with the lock surface 32. The pin 22 depresses the lock piece 29 against the force of the coil springs 31. Thus, each column 30 of the lock piece 29 is inserted in the corresponding lock groove 41. The cooperation lever 16 of the light switch knob 140 is located at the OFF position Q1 as shown in Fig. 7(a).

When the fog light switch knob 150 is turned anti-clockwise and shifted from the R1 position (fog lights off position) to the R2 position (Fr fog lights on position), the lock grooves 41 permit the fog light switch knob 150 to be rotated. When rotated, the fog light switch knob 150 is shifted to the state shown in Fig. 7(b). As a result, the front fog lights are turned on (see Fig. 11(b)).

If an operator tries to further rotate the fog light switch knob 150 from the R2 position (Fr fog lights on position) to the R3 position (Fr/Re fog lights on position), the fog light switch knob 150 is prevented from being rotated since the second end 41b of each lock groove 41 abuts against the corresponding column 30 as shown in Fig. 7(b). That is, the rear fog lights are not lighted on and is locked (see Fig. 11(b)).

When the fog light switch knob 150 is rotated clockwise from the R2 position (Fr fog lights on position) to the R1 position (fog lights off position), the lock grooves 41 permit the fog light switch knob 150 to be rotated to the state shown in Fig. 7(a). Accordingly, the front fog lights are turned off (see Fig. 11(c)).

In the state where the front and rear fog lights are turned off as shown in Figs. 7(a) and 11(c), when the light switch knob 140 is rotated from the OFF position Q1 to the first ON position Q2, the movable contacts 148 slide with respect to the fixed switch substrate 146 and causes a short circuit between a predetermined pair of terminals 147. As a result, the taillight relay is turned on to light on the taillights while the headlight relay remains off (see Fig. 11(d)).

When the light switch knob 140 is rotated, the pin 22 of the light switch knob 140 moves to the P2 position sliding along the inclined surface 34 as shown in Fig. 8 and engages with the unlock surface 33. At this time, the lock piece 29 moves toward the light switch knob 140 by the force of the coil springs 31. Thus, the columns 30 move away from the lock grooves 41. Therefore, the fog light switch knob 150 becomes unlocked so that the fog light switch knob 150 can be manipulated in the entire range (see Fig. 10(a)). When the light switch knob 140 is rotated, the cooperation lever 16 is located at the first ON position Q2 in Fig. 10(a).

In this state, when the fog light switch knob 150 is rotated from the R1 position (fog lights off position) to the R2 position (Fr fog lights on position), the relation between the fog light switch knob 150 and the cooperation lever 16 is shifted from the state shown in Fig. 10(a) to the state shown in Fig. 10(b).

In this state, the front fog light relay (not shown) is turned on and the rear fog light relay is turned off. As a result, the front fog lights are lighted on (see Fig. 11(e)).

When the fog light switch knob 150 is further rotated from the R2 position (Fr fog lights on position) to the R3 position (Fr/Re fog lights on position), the relation between the fog light switch knob 150 and the cooperation lever 16 is shifted from the state shown in Fig. 10(b) to the state shown in Fig. 10(c).

In this state, the front fog light relay and the rear fog light relay, which are not shown, are both turned on. Thus, the rear fog lights are also lighted on (see Fig. 11 (f)). In this state, the second end 40b of the cancellation groove 40 abuts against the cooperation lever 16 of the light switch knob 140 that is located at the first ON position Q2 as shown in Fig. 10(c).

In this state, when the fog light switch knob 150 is rotated clockwise from the R3 position (Fr/Re fog lights on position ) to the R2 position (Fr fog lights on position), the rear fog lights are turned off (see Figs. 11(g) and 10(b)).

When the fog light switch knob 150 is further rotated clockwise from the R2 position (Fr fog lights on position) to the R1 position (fog lights off position), the front fog lights are turned off (see Figs. 11(h) and 10(a)).

In the state shown in Figs. 11(h) and 10(a), when the light switch knob 140 is rotated from the first ON position Q2 to the second ON position Q3, the headlight relay and the taillight relay are both turned on. Thus, the headlights and the taillights are lighted on (see Fig. 11(i)).

In this state, the pin 22 of the light switch knob 140 moves from the P2 position to the P3 position as shown in Fig. 8 and engages with the unlock surface 33. Therefore, the columns 30 remain away from the lock grooves 41. That is, the fog light switch knob 150 is unlocked so that the fog light switch knob 150 can be manipulated in the entire range (see Fig. 10(a)). At the same time as the pin 22 of the light switch knob 140 is moved to the P3 position, the cooperation lever 16 is located at the second ON position Q3 as shown in Fig. 10(a).

In this state, when the fog light switch knob 150 is rotated from the R1 position (fog lights off position) to the R3 position (Fr/Re fog lights on position), the relation between the fog light switch knob 150 and the cooperation lever 16 is shifted from the state shown in Fig. 10(a) to the state shown in Fig. 10(c). At this time, the front and the rear fog lights are both lighted on (see Fig. 11 (j)).

In this state, when the light switch knob 140 is rotated from the second ON position Q3 to the first ON position Q2, the headlights are turned off (see Fig. 11(k)). At the same time, the cooperation lever 16 abuts against the second end 40b of the cancellation groove 40 as shown in Fig. 10(c).

In this state, when the light switch knob 140 is further rotated from the first ON position Q2 to the OFF position Q1, the cooperation lever 16 presses the second end 40b of the cancellation groove 40. This rotates the fog light switch knob 150 from the R3 position (Fr/Re fog lights on position) to the R2 position (Fr fog lights on position) (see Fig. 11 (1)). That is, the fog light switch knob 150 receives the rotational torque of the light switch knob 140 and is rotated clockwise to the R2 position (Fr fog lights on position). As a result, the rear fog lights are turned off and the front fog lights remain on.

The switch lever 110 of the preferred embodiment provides the following advantages.
(1) In the preferred embodiment, the light switch knob 140 (first switch knob) and the fog light switch knob 150 (second switch knob) are rotatable with respect to the common support shaft 20.
   The cancellation mechanism 200 is provided in the preferred embodiment. When the fog light switch knob 150 (second switch knob) is located at the R3 position (Fr/Re fog lights on position, or a first open and close manipulation position), the cancellation mechanism 200 turns off the rear fog lights by turning the fog light switch knob 150 to the R2 position (Fr fog lights on position, or a second open and close manipulation position) based on the rotation of the light switch knob 140 (first switch knob) to the off side.
   Further, the light switch knob 140 (first switch knob) includes the accommodating recess 143. The fixed switch substrate 146 used for lights has the fixed terminals 147. The fixed switch substrate 146 is secured to the support shaft 20 and is arranged in the accommodating recess 143. The light switch knob 140 includes the movable contacts 148, which contact and move away from the fixed terminals 147 of the fixed switch substrate 146.
   As a result, a switching device S of the light switch knob 140 is embedded in the switch lever 110.
(2) In the preferred embodiment, the light switch knob 140 (first switch knob) includes the main body 140a and the connecting member 140b. The main body 140a is rotatably secured to the support shaft 20. The connecting member 140b is rotatably secured to the support shaft 20 and connected to the main body 140a. The accommodating recess 143 is located between the connecting member 140b and the main body 140a. As a result, the switching device S is accommodated in the accommodating recess 143.
(3) In the preferred embodiment, the accommodating recess 143 is located in the main body 140a. As a result, the accommodating chamber for the switching device S is formed in a suitable manner.
(4) In the preferred embodiment, the cancellation groove 40 and the cooperation lever 16, which is inserted in the cancellation groove 40, constitute the cancellation mechanism 200. The light switch knob 140 (first switch knob) and the fog light switch knob 150 (second switch knob) are manipulated in corporation by the cancellation mechanism 200.
   When the light switch knob 140 is rotated to the off side, the cooperation lever 16 presses the second end 40b of the cancellation groove 40 transmitting the rotational torque of the light switch knob 140 to the fog light switch knob 150. Accordingly, the fog light switch knob 150 is located at the R2 position (Fr fog lights on position, or the second open and close manipulation position).
(5) In the preferred embodiment, the fog light switch knob 150 is used for different types of fog lights, which are the front fog lights and the rear fog lights. The fog light switch knob 150 is rotatable among the R1 position, which turns off two types of fog lights, the R2 position, which lights on the front fog lights, and the R3 position, which lights on the front fog lights and the rear fog lights. The light switch knob 140 is used for turning on and off the headlights and the taillights. This structure also provides the advantages (1) to (4).

It should be apparent to those skilled in the art that the present invention may be embodied in many other specific forms without departing from the spirit or scope of the invention. Particularly, it should be understood that the invention may be embodied in the following forms.

In the preferred embodiment, the light switch knob 140 is switched among three positions, which are Q1, Q2, and Q3. However, the light switch knob 140 may be switched between two positions or more than or equal to four positions.

In the preferred embodiment, the cooperation lever 16 is located on the light switch knob 140 and the cancellation groove 40 is located on the fog light switch knob 150. Instead, the cooperation lever 16 may be located on the fog light switch knob 150 and the cancellation groove 40 may be located on the light switch knob 140. In this case also, the cooperation lever 16 is engaged with the cancellation groove 40 in the same manner as the preferred embodiment.

In the preferred embodiment, the accommodating recess 143 is located in the main body 140a. However, the accommodating recess 143 may be located in the connecting member 140b. In this case also, the accommodating chamber is formed in a suitable manner.

In the preferred embodiment, the accommodating recess 143 is located only in the main body 140a. However, the accommodating recess may also be located in the connecting member 140b. Then, the accommodating recesses in the main body 140a and the connecting member 140b are joined to form a single accommodating chamber. In this case also, the accommodating chamber is formed in a suitable manner. This reduces the volume of the accommodating recess formed in each member as compared to the case where the accommodating recess is formed in one of the main body 140a and the connecting member 140b.

In the preferred embodiment, the present invention is applied to the light switch knob 140 and the fog light switch knob 150. However, the present invention may be applied to a switch knob for other built-in vehicle-mountable electric devices.

Therefore, the present examples and embodiments are to be considered as illustrative and not restrictive and the invention is not to be limited to the details given herein, but may be modified within the scope and equivalence of the appended claims.

## Claims

1. A complex switch lever for an automobile including a cancellation mechanism, wherein the complex switch lever includes a first switch knob (140), which is selectively switched between an on position and an off position, and a second switch knob (150), which is selectively switched between an on position and an off position, wherein the first switch knob and the second switch knob are rotatably supported by a support shaft (20), wherein, when the first switch knob (140) is turned from the on position to the off position while the second switch knob (150) is located at the on position, the second switch knob (150) is forced to move from the on position to the off position by the cancellation mechanism, the complex switch lever being **characterized in that**:
the first switch knob (140) includes an accommodating chamber (143), wherein the accommodating chamber (143) accommodates a switch substrate (146), which is secured to the support shaft (20) and has a fixed contact point (147), wherein the first switch knob (140) includes a movable contact point (148), which contacts and moves away from the fixed contact (147) of the switch substrate (146).

2. The complex switch lever according to claim 1, **characterized in that** the first switch knob (140) includes a main body (140a), which is rotatably arranged on the support shaft (20), and a connecting member (140b), which is integrally connected to the main body (140a), wherein the accommodating chamber (143) is located between the connecting member (140b) and the main body (140a).

3. The complex switch lever according to claim 2, **characterized in that** the accommodating chamber (143) includes an accommodating recess (143), which is located in one of the main body (140a) and the connecting member (140b).

4. The complex switch lever according to claim 1 or 2,
**characterized in that** the cancellation mechanism includes a cooperation lever (16), which is located on one of the first switch knob (140) and the second switch knob (150), and a groove (40), which is located on the other one of the first switch knob (140) and the second switch knob (150) to be engaged with the cooperation lever (16), wherein, when the first switch knob (140) is rotated from the on position to the off position, the rotational torque of the first switch knob is transmitted to the second switch knob by the engagement of the cooperation lever (16) and the groove (40).

5. The complex switch lever according to claim 1 or 2, **characterized in that** the first switch knob is a light switch knob (140), which is manipulated to turn on and off a headlight and a taillight of the automobile, wherein the second switch knob is a fog light switch knob (150), which is manipulated to turn on and off a front fog light and a rear fog light of the automobile.

6. The complex switch lever according to claim 5, **characterized in that** the light switch knob (140) is selectively switched among an off position (Q1) for turning off the headlight and the taillight, a first ON position (Q2) for turning off the headlight and turning on the taillight, and a second ON position (Q3) for turning on the headlight and the taillight, wherein the fog light switch knob (150) is selectively switched among a first position (R1) for turning off the front fog light and the rear fog light, a second position (R2) for turning on the front fog light and turning off the rear fog light, and a third position (R3) for turning on the front fog light and the rear fog light.

## Patentansprüche

1. Komplexer Hebelschalter für ein Kraftfahrzeug, der einen Aufhebungsmechanismus umfasst, wobei der komplexe Hebelschalter einen ersten Schaltknopf (140), der selektiv zwischen einem Einschaltzustand und einem Ausschaltzustand umgeschaltet wird, und einen zweiten Schaltknopf (150), der selektiv zwischen einem Einschaltzustand und einem Ausschaltzustand umgeschaltet wird, umfasst, wobei der erste Schaltknopf und der zweite Schaltknopf drehbar von einer Stützwelle (20) getragen werden, wobei, wenn der erste Schaltknopf (140) von dem Einschaltzustand in den Ausschaltzustand gedreht wird, während der zweite Schaltknopf (150) sich in dem Einschaltzustand befindet, der zweite Schaltknopf (150) durch den Aufhebungsmechanismus gezwungen wird, sich von dem Einschaltzustand in den Ausschaltzustand zu bewegen, wobei der komplexe Hebelschalter **dadurch gekennzeichnet ist, dass**:
der erste Schaltknopf (140) eine Aufnahmekammer (143) umfasst, wobei die Aufnahmekammer (143) einen Schalterträger (146) aufnimmt, der an der Stützwelle (20) befestigt ist und einen feststehenden Kontaktpunkt (147) aufweist, wobei der erste Schaltknopf (140) einen bewegbaren Kontaktpunkt (148) umfasst, der mit dem feststehenden Kontakt (147) des Schalterträgers (146) in Kontakt kommt und sich von diesem wegbewegt.

2. Komplexer Hebelschalter nach Anspruch 1, **dadurch gekennzeichnet, dass** der erste Schaltknopf (140) einen Hauptkörper (140a), der drehbar an der Stützwelle (20) angeordnet ist, und ein Verbindungselement (140b), das integral mit dem Hauptkörper (140b) verbunden ist, umfasst, wobei sich die Aufnahmekammer (143) zwischen dem Verbindungselement (140b) und dem Hauptkörper (140a) befindet.

3. Komplexer Hebelschalter nach Anspruch 2, **dadurch gekennzeichnet, dass** die Aufnahmekammer (143) eine Aufnahmeausnehmung (143) umfasst, die sich in einem des Hauptkörpers (140a) und des Verbindungselements (140b) befindet.

4. Komplexer Hebelschalter nach Anspruch 1 oder 2, **dadurch gekennzeichnet, dass** der Aufhebungsmechanismus einen Wirkhebel (16), der sich an einem des ersten Schaltknopfs (140) und des zweiten Schaltknopfs (150) befindet, und eine Nut (40), die sich an dem anderen des ersten Schaltknopfs (140) und des zweiten Schaltknopfs (150) befindet, um mit dem Wirkhebel (16) in Eingriff zu treten, umfasst, wobei, wenn der erste Schaltknopf (140) von dem Einschaltzustand in den Ausschaltzustand gedreht wird, das Drehmoment des ersten Schaltknopfs durch das Ineinandergreifen des Wirkhebels (16) und der Nut (40) auf den zweiten Schaltknopf übertragen wird.

5. Komplexer Hebelschalter nach Anspruch 1 oder 2, **dadurch gekennzeichnet, dass** der erste Schaltknopf ein Lichtschaltknopf (140) ist, der betätigt wird, um einen Frontscheinwerfer und einen Heckscheinwerfer des Kraftfahrzeugs ein- und auszuschalten, wobei der zweite Schaltknopf ein Nebelleuchtenschaltknopf (150) ist, der betätigt wird, um eine Front-Nebelleuchte und eine Nebelschlussleuchte des Kraftfahrzeugs ein- und auszuschalten.

6. Komplexer Hebelschalter nach Anspruch 5, **dadurch gekennzeichnet, dass** der Lichtschaltknopf (140) selektiv zwischen einem Ausschaltzustand (Q1) zum Ausschalten des Frontscheinwerfers und des Heckscheinwerfers, einem ersten Einschaltzustand (Q2) zum Ausschalten des Frontscheinwerfers und Einschalten des Heckscheinwerfers, und einem zweiten Einschaltzustand (Q3) zum Einschalten des Frontscheinwerfers und des Heckscheinwerfers umgeschaltet werden kann, während der Nebelleuchtenschaltknopf (150) selektiv zwischen einer ersten Position (R1) zum Ausschalten der Front-Nebelleuchte und der Nebelschlussleuchte, einer zweiten Position (R2) zum Einschalten der Front-Nebelleuchte und Ausschalten der Nebelschlussleuchte und einer dritten Position (R3) zum Einschalten der Front-Nebelleuchte und der Nebelschlussleuchte umgeschaltet wird.

## Revendications

1. Levier d'interrupteur complexe pour un véhicule automobile englobant un mécanisme de suppression, le levier d'interrupteur complexe englobant un premier bouton de commutation (140) que l'on utilise pour passer de manière sélective d'une position de marche à une position d'arrêt et vice versa et un deuxième bouton de commutation (150) que l'on utilise pour passer de manière sélective d'une position de marche à une position d'arrêt et vice versa, le premier bouton de commutation et le deuxième bouton de commutation étant supportés en rotation par un arbre de support (20), dans lequel, lorsque le premier bouton de commutation (140) passe par rotation de la position de marche à la position d'arrêt, tandis que le deuxième bouton de commutation (150) se trouve dans la position de marche, le mécanisme de suppression fait passer le deuxième bouton de commutation (150) de manière forcée de la position de marche à la position d'arrêt, le levier d'interrupteur complexe étant **caractérisé en ce que** :
le premier bouton de commutation (140) englobe une chambre d'hébergement (143), la chambre d'hébergement (143) hébergeant un substrat de commutation (146) qui est fixé à l'arbre du support (20) et qui possède un point de contact fixe (147), le premier bouton de commutation (140) englobant un point de contact mobile (148) qui entre en contact avec le contact fixe (147) du substrat de commutation (146) et s'écarte dudit contact fixe (146).

2. Levier d'interrupteur complexe selon la revendication 1, **caractérisé en ce que** le premier bouton de commutation (140) englobe un corps principal (140a) qui est monté en rotation sur l'arbre de support (20) et un membre de liaison (140b) qui est relié en une seule pièce au corps principal (140a), la chambre d'hébergement (143) étant disposée entre le membre de liaison (140b) et le corps principal (140a).

3. Levier d'interrupteur complexe selon la revendication 2, **caractérisé en ce que** la chambre d'hébergement (143) englobe un évidement d'hébergement (143) qui est disposé, soit dans le corps principal (140a), soit dans le membre de liaison (140b).

4. Levier d'interrupteur complexe selon la revendication 1 ou 2, **caractérisé en ce que** le mécanisme de suppression englobe un levier de coopération (16) qui est disposé sur un bouton de commutation choisi parmi le premier bouton de commutation (140) et le deuxième bouton de commutation (150), et une rainure (40) qui est disposée sur l'autre bouton de commutation choisi parmi le premier bouton de commutation (140) et le deuxième bouton de commutation (150)

5. Levier d'interrupteur complexe selon la revendication 1 ou 2, **caractérisé en ce que** le premier bouton de commutation est un bouton de commutation des feux (140) qui est manipulé pour la mise en marche et pour l'arrêt des phares avant et des phares arrière du véhicule automobile, le deuxième bouton de commutation représentant un bouton de commutation des phares antibrouillard (150) qui est manipulé pour la mise en marché pour l'arrêt des feux antibrouillard avant et des feux antibrouillard arrière du véhicule automobile.

6. Levier d'interrupteur complexe selon la revendication 5, **caractérisé en ce qu'**on fait passer le bouton de commutation des feux (140) de manière sélective par une position d'arrêt (Q1) pour la mise à l'arrêt des phares avant et des phares arrière, une première position de marche (Q2) pour la mise à l'arrêt des phares avant et la marche des phares arrière, et une deuxième position de marche (Q3) pour la marche des phares avant et des feux arrière, le bouton de commutation des phares antibrouillard (150) faisant l'objet d'une commutation sélective entre une première position (R1) pour l'arrêt des feux antibrouillard avant et des feux antibrouillard arrière, une deuxième position (R2) pour la marche des feux antibrouillard avant et l'arrêt des feux antibrouillard arrière, et une troisième position (R3) pour la marche des feux antibrouillard avant et des feux antibrouillard arrière.
